# EUROPÄISCHE PATENTANMELDUNG

(11) **EP 2 166 315 A1**
(43) Veröffentlichungstag der Anmeldung: **24.03.2010**
(21) Anmeldenummer: 09011800.1
(22) Anmeldetag: 16.09.2009
(51) Int. Cl.: G01D 13/28

(54) **Anzeigeinstrument eines Kraftfahrzeugs**

(30) Priorität: 20.09.2008 DE 102008048195
(71) Anmelder: GM Global Technology Operations, Inc., Detroit, MI 48265-3000 (US)
(72) Erfinder: Draisbach, Mike, 55286 Wörrstadt (DE)
(74) Vertreter: Strauss, Peter

(57) **Zusammenfassung**

Ein Anzeigeinstrument (5) eines Kraftfahrzeugs (1) verfügt über ein Ziffernblatt und einen beleuchtbaren und drehbaren Zeiger. Zur Verbesserung der Funktionalität des Anzeigeinstruments (5) ist ein kritischer Betriebszustand des Kraftfahrzeugs (1) mit einem Farbwechsel des Zeigers darstellbar.

## Beschreibung

Die Erfindung bezieht sich auf ein Anzeigeinstrument eines Kraftfahrzeugs mit einem Ziffernblatt und einem beleuchtbaren und drehbaren Zeiger.

Kraftfahrzeuge verfügen über ein oder mehrere Anzeigeinstrumente beispielsweise für eine Motorendrehzahl oder eine Fahrzeuggeschwindigkeit. Derartige Anzeigeinstrumente umfassen ein Ziffernblatt, auf dem die Motordrehzahl oder die Fahrzeuggeschwindigkeit mit entsprechenden Ziffern kenntlich gemacht ist, und einen drehbaren Zeiger, der von einem zentralen Steuergerät über eine entsprechende Drehmechanik zur Anzeige der Motordrehzahl oder der Fahrzeuggeschwindigkeit angesteuert wird. Um das Anzeigeinstrument auch bei Dunkelheit ablesen zu können, ist es üblich, das Ziffernblatt insbesondere indirekt und den Zeiger selbst zu beleuchten.

Weiterhin ist es bekannt, in Kraftfahrzeugen verschiedene Fahrassistenz-Systeme vorzusehen, um einen Fahrer zu unterstützen.

Die DE 198 29 162 A1 beschreibt ein Bilderfassungssystem in einem Kraftfahrzeug zur selbsttätigen Erkennung von Verkehrszeichen, um einem Fahrer einen möglichen Verkehrsverstoß, wie beispielsweise eine Geschwindigkeitsübertretung, anzuzeigen.

Weiterhin beschreibt die DE 33 34 715 C2 eine Einrichtung zur Erzeugung eines Schaltempfehlungs-Signals für ein Kraftfahrzeug. Dabei wird anhand einer Fahrtgeschwindigkeit, einer Motordrehzahl und einer Stellung eines Gaspedals ermittelt, welches die kraftstoffsparendste Fahrstufe ist und einem Fahrer eine entsprechende Mitteilung ausgegeben, wodurch ein Kraftstoffverbrauch reduziert werden kann.

Für derartige Fahrassistenz-Systeme sind allerdings jeweils zusätzliche Anzeigeinstrumente, Displays oder dergleichen notwendig.

Es ist Aufgabe der Erfindung, ein Anzeigeinstrument der eingangs genannten Art zu schaffen, mit dem weitere Funktionalitäten ausführbar sind.

Erfindungsgemäß wird die Aufgabe dadurch gelöst, dass ein kritischer Betriebszustand des Kraftfahrzeugs mit einem Farbwechsel des Zeigers darstellbar ist.

Bei einem derart ausgebildeten Anzeigeinstrument ist der drehbare Zeiger in an sich bekannter Weise beleuchtbar, um das Anzeigeinstrument, dessen Ziffernblatt ebenfalls beleuchtbar sein kann, auch bei Dunkelheit ablesen zu können. Weiterhin ist die Beleuchtung des Zeigers derart ausgeführt, dass mehrere Lichtfarben erzeugbar sind, um den Zeiger beispielsweise grün, gelb oder rot zu beleuchten. Soll keine weitere Information vermittelt werden, kann der Zeiger in neutralem weiß beleuchtet werden. Befindet sich das Kraftfahrzeug in einem nicht gewünschten oder sogar potentiell verkehrsgefährdenden Fahrtzustand, dann wird der Zeiger beispielsweise rot als Signalfarbe beleuchtet, um den Fahrer unmittelbar auf diesen Umstand hinzuweisen. Da sich das Anzeigeinstrument üblicherweise im direkten Blickfeld des Fahrers befindet, wird er durch die rote Beleuchtung des Zeigers zuverlässig auf den nicht gewünschten Betriebszustand des Kraftfahrzeugs hingewiesen. Hierzu können vorzugsweise von einem zentralen Steuergerät alle Funktionen und Messgrößen des Kraftfahrzeugs überwacht werden, so dass beispielsweise bei einer zu schnellen Kurvenfahrt, die das Ansprechen eines elektronischen Stabilitätsprogramms erfordert, eine entsprechende Warnmitteilung durch das rote Beleuchten des Zeigers ausgegeben wird. Selbstverständlich können unter anderem der Drehzahlmesser und/oder der Tachometer des Kraftfahrzeugs entsprechend ausgebildet sein, um deren Zeiger jeweils mit unterschiedlichen Farben zu beleuchten.

Der Vorteil der Erfindung besteht darin, dass zur Anzeige eines nicht gewünschten oder kritischen Fahrtzustands des Kraftfahrzeugs kein zusätzliches Anzeigeinstrument notwendig ist, sondern lediglich ein bereits vorhandenes Anzeigeinstrument entsprechend angesteuert werden muss, wobei die Erzeugung von Licht unterschiedlicher Farben bevorzugt wie im Folgenden beschrieben erfolgen kann. Hierzu muss lediglich das Steuergerät geringfügig modifiziert werden, um einen kritischen oder unerwünschten Fahrzustand festzustellen und anzuzeigen. Prinzipiell kann eine solche Anzeige auch im Stand des Kraftfahrzeugs erfolgen.

In einer ersten Ausgestaltung kann mit Hilfe eines Bilderfassungssystems eine Geschwindigkeitsbegrenzung, die mit einem Verkehrsschild signalisiert ist, erfasst und vorzugsweise im Steuergerät ausgewertet werden. Im Steuergerät liegt auch die Information über die momentane Fahrtgeschwindigkeit des Kraftfahrzeugs vor, so dass bei einer zu hohen Fahrtgeschwindigkeit der Zeiger als Warnsignal rot beleuchtet werden kann. Liegt jedoch die Fahrtgeschwindigkeit unterhalb der zulässigen Höchstgeschwindigkeit kann der Zeiger als Bestätigung grün ausgeleuchtet werden, bei einer Fahrzeuggeschwindigkeit innerhalb der Toleranzgrenze oberhalb der zulässigen Höchstgeschwindigkeit kann der Zeiger als Vorwarnung beispielsweise gelb oder orange beleuchtet werden.

In gleicher Weise kann eine Geschwindigkeitsbegrenzung auch aus den Informationen eines Navigationssystems herausgelesen werden, bei dem in den Strecken- und Fahrbahninformationen jeweils auch die dort zulässigen Höchstgeschwindigkeiten mit abgespeichert sind. Wird ein Streckenabschnitt mit einer Geschwindigkeitsbegrenzung befahren, dann wird vom Steuergerät ebenfalls eine entsprechende Warnmitteilung bei einer Geschwindigkeitsübertretung über einen roten oder gelben Zeiger ausgegeben.

Weiterhin kann mit Hilfe eines Abstandssensors, beispielsweise eines Radarsensors oder eines Infrarotsensors, ein Abstand zu einem vorausfahrenden Verkehrsteilnehmer überwacht werden. In Abhängigkeit von der eigenen Fahrtgeschwindigkeit wird vom Steuergerät ein mindestens erforderlicher Sicherheitsabstand ermittelt, bei dessen Unterschreitung der Zeiger des Anzeigeinstruments ebenfalls rot beleuchtet werden kann.

Ebenso kann eine ökonomische Fahrweise als bevorzugter Betriebszustand dem Fahrer angezeigt werden. Wird bei der aktuellen Fahrzeuggeschwindigkeit und einer eingelegten Fahrstufe eines Getriebes eine zu hohe Drehzahl benötigt, so wird dies über einen gelben oder roten Zeiger dem Fahrer angezeigt, so dass dieser entweder die Motordrehzahl reduziert oder die Fahrstufe wechselt. Liegt jedoch eine kraftstoffsparende Fahrweise vor, dann wird dies durch einen grünen Zeiger verdeutlicht.

Des Weiteren kann einem Fahrer eine Empfehlung zum Wechseln einer Fahrstufe, vorzugsweise eines Schaltgetriebes, angezeigt werden. Vom Steuergerät wird dazu die momentane Fahrzeuggeschwindigkeit, die Motordrehzahl sowie die Stellung des Gaspedals ausgewertet, um festzustellen, ob die momentane Fahrstufe zum einen ökonomisch ist und zum anderen der Antriebsmotor nicht unnötig belastet wird. Soll eine Fahrstufe gewechselt werden, wird dies durch einen roten Zeiger verdeutlicht, während bei richtiger Fahrstufe der Zeiger grün leuchtet.

Zur Erzeugung von Licht unterschiedlicher Farbe für den Zeiger dient bevorzugt mindestens eine Leuchtdiode als Lichtquelle. Dabei kann eine einzige Leuchtdiode beispielsweise durch Anlegen verschiedener Betriebsspannungen Licht unterschiedlicher Farben erzeugen oder es werden verschiedene Leuchtdioden mit jeweils einer eigenen Lichtfarbe eingesetzt.

Um das Licht einer oder mehrerer Leuchtdioden in den drehbaren Zeiger einzukuppeln, dient zweckmäßigerweise ein Lichtleiter, vorzugsweise aus einem Kunststoffmaterial. In vorteilhafter Ausgestaltung besteht der drehbare und beleuchtbare Zeiger aus einem transparenten Kunststoffmaterial, wie beispielsweise Polymethylmethacrylat (PMMA).

Eine entsprechende Funktionalität der Ausgabe von Warnmitteilungen oder Informationen über einen Farbwechsel eines drehbaren und beleuchtbaren Zeigers kann auch mit Hilfe einer Bildschirmdarstellung eines Zeigerinstruments ausgeführt werden. Bekannt ist es, Anzeigeinstrumente oder Rundinstrumente durch eine Displaydarstellung zu ersetzen. In diesem Fall können die Bildschirmdarstellungen des drehbaren Zeigers in entsprechender Weise unter anderem rot, grün, gelb oder weiß wiedergegeben werden, um einen Normalbetrieb bzw. bei rotem oder grünem Aufleuchten einen unerwünschten oder einen erwünschten Betriebszustand anzuzeigen. Natürlich ist hierzu das Display von einem zentralen Steuergerät entsprechend ansteuerbar.

Im Vorhergehenden wurde die Erfindung im Wesentlichen im Zusammenhang mit einem Anzeigeinstrument in einem Kraftfahrzeug beschrieben, es ist für den Fachmann jedoch ersichtlich, dass ein derartig ausgebildetes Anzeigeinstrument auch auf allen anderen Gebieten der Technik einsetzbar ist, um einen gewünschten Betriebszustand durch das beispielsweise grüne Ausleuchten eines drehbaren Zeigers anzuzeigen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

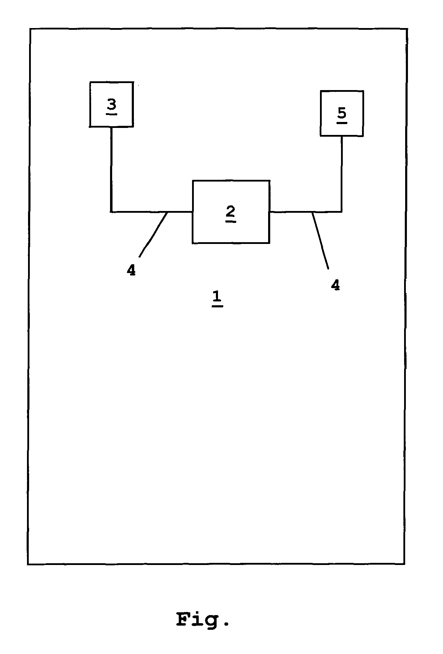

Die Erfindung wird im Folgenden anhand eines Ausführungsbeispiels mit Bezugnahme auf die Zeichnung näher erläutert. Die einzige Figur der Zeichnung zeigt ein Blockschaltbild eines Kraftfahrzeugs mit einem erfindungsgemäßen Anzeigeinstrument.

Das Kraftfahrzeug 1 ist mit einem zentralen Steuergerät 2 ausgestattet, das alle Funktionen des Kraftfahrzeugs 1 überwacht und Informationen mit Hilfe von einem oder mehreren Sensoren 3 erfasst, die, wie mit den Verbindungslinien 4 angedeutet, mit dem Steuergerät 2 in Verbindung stehen. Der Sensor 3 ist beispielsweise ein Abstandssensor, ein Drehzahlsensor oder ein Geschwindigkeitssensor.

Vom Steuergerät 2 wird unter anderem ein Anzeigeinstrument 5 mit einem Ziffernblatt und einem drehbaren Zeiger angesteuert, um eine Fahrzeuggeschwindigkeit oder eine Motordrehzahl einem Fahrer des Kraftfahrzeugs 1 anzuzeigen. In an sich bekannter Weise ist das Ziffernblatt des Anzeigeinstruments 5 indirekt beleuchtet, um das Anzeigeinstrument 5 auch bei Dunkelheit zuverlässig ablesen zu können. Hierzu ist dem drehbaren Zeiger des Anzeigeinstruments 5, vorzugsweise über einen Lichtleiter, eine Leuchtdiode als Lichtquelle zugeordnet, um auch den Zeiger des Anzeigeinstruments 5 selbst zu beleuchten.

Wird vom Steuergerät 2 ein kritischer oder unerwünschter Fahrtzustand des Kraftfahrzeugs 1 festgestellt, beispielsweise eine zu hohe Motordrehzahl, ein zu geringer Sicherheitsabstand, eine Geschwindigkeitsübertretung oder dergleichen, dann wird dies dem Fahrer des Kraftfahrzeugs 1 durch einen Farbwechsel des beleuchtbaren Zeigers des Anzeigeinstruments 5 angezeigt. Hierzu kann eine mehrfarbige Leuchtdiode entsprechend angesteuert werden oder dem Lichtleiter zum Beleuchten des Zeigers sind mehrere verschiedenfarbige Leuchtdioden zugeordnet. Im Normalbetrieb wird der drehbare Zeiger grün oder weiß beleuchtet, sobald sich jedoch eine kritische Situation andeutet, erfolgt ein Farbwechsel auf gelb oder orange und in einem unerwünschten oder gefährlichen Betriebszustand des Kraftfahrzeugs wird der Zeiger rot beleuchtet.

Bezugszeichenliste
- 1.: Kraftfahrzeug
- 2.: Steuergerät
- 3.: Sensor
- 4.: Verbindungslinie
- 5.: Anzeigeinstrument

## Patentansprüche

1. Anzeigeinstrument eines Kraftfahrzeugs (1) mit einem Ziffernblatt und einem beleuchtbaren und drehbaren Zeiger, **dadurch gekennzeichnet, dass** ein kritischer Betriebszustand des Kraftfahrzeugs (1) mit einem Farbwechsel des Zeigers darstellbar ist.

2. Anzeigeinstrument nach Anspruch 1, **dadurch gekennzeichnet, dass** ein Farbwechsel des Zeigers in Abhängigkeit einer von einem Bilderfassungssystem erfassten Geschwindigkeitsbegrenzung erfolgt.

3. Anzeigeinstrument nach Anspruch 1, **dadurch gekennzeichnet, dass** ein Farbwechsel des Zeigers in Abhängigkeit einer Geschwindigkeitsbegrenzung gemäß einer Information eines Navigationssystems erfolgt.

4. Anzeigeinstrument nach Anspruch 1, **dadurch gekennzeichnet, dass** ein Farbwechsel des Zeigers in Abhängigkeit eines von einem Abstandssensor überwachten Sicherheitsabstandes zu einem vorausfahrenden Verkehrsteilnehmer erfolgt.

5. Anzeigeinstrument nach Anspruch 1, **dadurch gekennzeichnet, dass** durch einen Farbwechsel des Zeigers eine ökonomische Fahrweise darstellbar ist.

6. Anzeigeinstrument nach Anspruch 1, **dadurch gekennzeichnet, dass** durch einen Farbwechsel des Zeigers eine Gangwechselempfehlung ausgebbar ist.

7. Anzeigeinstrument nach einem der Ansprüche 1 bis 6, **dadurch gekennzeichnet, dass** bei einem Farbwechsel des Zeigers die Farbe zwischen roten und grünen Farbtönen wechselt.

8. Anzeigeinstrument nach einem der Ansprüche 1 bis 7, **dadurch gekennzeichnet, dass** dem Zeiger mindestens eine Leuchtdiode als Lichtquelle zugeordnet ist.

9. Anzeigeinstrument nach Anspruch 8, **dadurch gekennzeichnet, dass** zwischen der Leuchtdiode und dem drehbarem Zeiger ein Lichtleiter angeordnet ist.

10. Anzeigeinstrument nach einem der Ansprüche 1 bis 9, **dadurch gekennzeichnet, dass** der Zeiger aus Kunststoff besteht, insbesondere aus Polymethylmethacrylat (PMMA).

11. Anzeigeinstrument nach einem der Ansprüche 1 bis 10, **dadurch gekennzeichnet, dass** das Anzeigeinstrument (5) und/oder der Zeiger eine Bildschirmdarstellung ist.
